# EUROPÄISCHE PATENTSCHRIFT

(11) **EP 4 144 542 B1**
(45) Veröffentlichungstag und Bekanntmachung des Hinweises auf die Patenterteilung: **27.11.2024**
(21) Anmeldenummer: 22186832.6
(22) Anmeldetag: 26.07.2022
(51) Int. Cl.: B60C 11/12, B60C 11/03

(54) **FAHRZEUGLUFTREIFEN**
PNEUMATIC TYRE
PNEUMATIQUE DE VÉHICULE

(30) Priorität: 01.09.2021 DE 102021209584
(43) Veröffentlichungstag der Anmeldung: 08.03.2023
(73) Patentinhaber: Continental Reifen Deutschland GmbH, 30175 Hannover (DE)
(72) Erfinder: Vennebörger, Martin, 30165 Hannover (DE); Fuchs, Artur, 30165 Hannover (DE); Brockmann, Jürgen, 30165 Hannover (DE); Heinhaupt, Torsten, 30165 Hannover (DE); Bauer, Claudia, 30165 Hannover (DE); Seng, Matthias, 30165 Hannover (DE)
(74) Vertreter: Continental Corporation

(56) Entgegenhaltungen:
- WO-A1-2012/164450
- CN-A- 101 085 591
- JP-A- H0 994 829
- JP-A- H11 151 914
- US-B2- 8 146 631

## Beschreibung

Die Erfindung betrifft einen Fahrzeugluftreifen mit einem Laufstreifen mit Profilblöcken oder zumindest einer in Umfangsrichtung umlaufenden Profilrippe, in welchen bzw. in welcher in Draufsicht unter einem Winkel von 0° bis zu 50° zur axialen Richtung verlaufende, eine Breite von 0,4 mm bis 2,0 mm, eine maximale Tiefe von 60% bis 100% der Profiltiefe, Einschnittwände und einen Einschnittgrund aufweisende Einschnitte ausgebildet sind, wobei jeder Einschnitt, im Querschnitt betrachtet, einen zur radialen Richtung unter einem Winkel von 15° bis 55° verlaufenden, radial äußeren Einschnittabschnitt und einen an diesen anschließenden, zur radialen Richtung unter einem Winkel von 0° bis 5° verlaufenden, bis zum Einschnittgrund reichenden, radial inneren Einschnittabschnitt aufweist, wobei die Einschnittabschnitte miteinander einen stumpfen Winkel einschließen, sodass der Einschnitt am gegenseitigen Anschluss der Einschnittabschnitte einen Knick aufweist, die eine Einschnittwand über die Knickinnenseite und die andere Einschnittwand über die Knickaußenseite verläuft und die Einschnittwänden im radial äußeren Einschnittabschnitt radial äußere Wandabschnitte und im radial inneren Einschnittabschnitt radial innere Wandabschnitte aufweisen.

Ein derartiger Fahrzeugluftreifen ist beispielsweise aus der DE 41 07 547 A1 bekannt. Gemäß einem Ausführungsbeispiel weist der Reifen einen Laufstreifen mit Profilblöcken auf, welche mit in Draufsicht in axialer Richtung verlaufenden, räumlich gekrümmten Einschnitten versehen sind, die sich, im Querschnitt betrachtet, aus einem zur radial Richtung unter einem Winkel von 20° bis 60° verlaufenden, radial äußeren Einschnittabschnitt und einem zur radialen Richtung unter einem Winkel von 5° bis 20° verlaufenden radial inneren Einschnittabschnitt zusammensetzen, wobei der radial innere Einschnittabschnitt zum radial äußeren Einschnittabschnitt bezüglich der radialen Richtung gegensinnig geneigt ist. Die Einschnitte schaffen an der Außenfläche der Profilpositive Griffkanten, die eine gute Anpassung an feine Strukturen im Untergrund ermöglichen sollen.

Die CN 101085591 A, JP H0994829 A, JP H11151914A und die US 8146631 B2 offenbaren jeweils einen Fahrzeugluftreifen mit einem Laufstreifen mit Profilblöcken aufweisend Einschnitte, wobei die Einschnitte zur radialen Richtung winklig ausgerichtete Einschnittswände aufweisen.

Der Erfindung liegt die Aufgabe zugrunde, bei einem Fahrzeugluftreifen der eingangs genannten Art die Nässe- und Schneeperformance weiter zu verbessern.

Gelöst wird die gestellte Aufgabe erfindungsgemäß dadurch, dass an der über die Knickinnenseite verlaufenden Einschnittwand des Einschnittes lokal jeweils zumindest eine, in radialer Richtung langgestreckte Ausnehmung ausgebildet ist, welche über beide Wandabschnitte verläuft und bis zum Einschnittgrund reicht.

Die Ausnehmungen nehmen beim Fahren auf nasser und/oder verschneiter Fahrbahn - gegenüber Einschnitten ohne Ausnehmungen - insgesamt mehr Schnee bzw. Wasser auf. Da die Ausnehmungen lediglich lokal an der über die Knickinnenseite verlaufenden Einschnittwand ausgebildet sind, bleibt die Steifigkeit der Profilpositive vorteilhafter Weise unbeeinflusst. Bei neuem bzw. wenig abgefahrenem Reifen sind die Profilpositive besonders biegefähig, sodass beim Kontakt mit dem Untergrund die Einschnitte aufklappen und entsprechend "große" Mengen Wasser und/oder Schnee aufnehmen könen. Mit fortschreitendem Abrieb des Laufstreifens nimmt die Steifigkeit der Profilpositive zu, wodurch die Einschnitte bei Kontakt mit dem Untergrund weniger stark aufklappen. Gleichzeitig treten mit fortschreitendem Laufstreifenabrieb die Ausnehmungen an die Profilpositivaußenflächen und stellen derart direkt von der (abgeriebenen) Laufstreifenperipherie ausgehendes zusätzliches Leervolumen zur Verfügung, sodass gute Wasser- und Schneeaufnahmeeigenschaften erhalten bleiben und in dieser Hinsicht die abnehmende Öffnungsfähigkeit der Einschnitte kompensiert ist.

Die Einschnitte tragen somit zu einer guten Nässe- und Schneeperformance über den Laufstreifenabrieb bei.

Gemäß einer bevorzugten Ausführung reicht die Ausnehmung bis zum radial äußeren Ende des radial äußeren Wandabschnittes der über die Knickinnenseite verlaufenden Einschnittwand. Die Ausnehmung zeigt daher bereits bei neuem Reifen eine vorteilhafte Wirkung, wobei die für die Nässe- und Schneeperformance vorteilhaften Effekte günstiger Weise bereits nach geringem Laufstreifabrieb in verstärktem Ausmaß auftreten.

Ein sehr vorteilhafter Kompromiss zwischen einer hoher Steifigkeit der Profilpositive und der Nässe- und Schneeperformance wird erzielt, wenn die bzw. jede Ausnehmung am radial inneren Wandabschnitt der über die Knickinnenseite verlaufenden Einschnittwand zwei insbesondere gerade verlaufende, radial innere Begrenzungskanten aufweist, zwischen welchen die bzw. jede Ausnehmung an der schmalsten Stelle eine parallel zur Laufstreifenperipherie ermittelte Breite aufweist, wobei - bei einer einzigen Ausnehmung am jeweiligen Einschnitt - die Breite 15% bis 40%, bevorzugt 20% bis 30%, der Länge des Einschnittes einnimmt und wobei - bei mehreren Ausnehmungen am jeweiligen Einschnitt - die Breiten der Ausnehmungen gemeinsam 15% bis 40%, bevorzugt 20% bis 30%, der Länge des Einschnittes einnehmen.

Gemäß einer weiteren bevorzugten Ausführung weist die Ausnehmung eine niveaugleich mit dem Einschnittgrund ausgebildete Bodenfläche auf. Die Ausnehmung ist daher entsprechend tief ausgeführt, was insbesondere für die Nässeperformance günstig ist und wodurch die vorteilhafte Wirkung der Ausnehmung über den gesamten Laufstreifenabrieb erhalten bleibt.

Bei der letztgenannten Ausführung ist es von Vorteil, wenn die Bodenfläche trapezförmig, insbesondere gleichschenkelig trapezförmig ist, wobei sie eine am Einschnittgrund liegende Basis, eine dieser gegenüberliege, die kürzere Grundseite des Trapezes bildende Bodenkante und zwei weitere Bodenkanten aufweist. In einer solche Ausnehmung ist beim Fahren auf Schnee die "Schneeverdichtung" und der "Schneehalt" verbessert.

Bevorzugter Weist ist die letztgenannte Ausführung ferner dadurch gekennzeichnet, dass die Ausnehmung durch eine vom radial äußeren Ende des radial äußeren Wandabschnittes ausgehende, zur Bodenfläche verlaufende, ebene Rückwand mitbegrenzt ist.

Für die Schneeverdichtung und den Schneehalt in der Ausnehmung ist es von weiterem Vorteil, wenn die Ausnehmung an der Rückwand an der schmalsten Stelle eine parallel zur Laufstreifenperipherie ermittelte Breite von 75% bis 95% der zwischen den radial inneren Begrenzungskanten der Ausnehmung an der schmalsten Stelle parallel zur Laufstreifenperipherie ermittelten Breite aufweist.

Gemäß einer weiteren bevorzugten Ausführung ist die Ausnehmung durch zwei vom radial äußeren Wandabschnitt der über die Knickinnenseite verlaufenden Einschnittwand ausgehenden, zur Bodenfläche verlaufenden, ebene Seitenwänden mitbegrenzt.

Bei einer weiteren bevorzugten Ausführung ist vorgesehen, dass der radial äußere Einschnittabschnitt an den radial inneren Einschnittabschnitt in einer in radialer Richtung ermittelten Tiefe von 30% bis 50%, insbesondere von 35% bis 45%, der maximalen Tiefe des Einschnittes anschließt.

Gemäß einer weiteren bevorzugten Ausführung beträgt der Winkel, unter welchem der radial äußere Einschnittabschnitt zur radialen Richtung verläuft, 20° bis 45°, bevorzugt 25° bis 35°.

Ferner ist es bevorzugt, wenn der radial innere Einschnittabschnitt, im Querschnitt betrachtet, zur radialen Richtung unter einem Winkel von 0° bis 3° verläuft.

Eine weitere bevorzugte Ausführung ist dadurch gekennzeichnet, dass die Einschnitte die Profilpositive durchqueren. Solche Einschnitte haben - gegenüber zumindest einseitig innerhalb der Profilpositive endenden Einschnitten - beim Durchlaufen der Bodenaufstandsfläche ein ausgeprägteres Öffnungsverhalten, sodass die vorteilhaften Effekte der Ausnehmung besonders deutlich auftreten.

Die Wirkungsweise der Ausnehmung ist besonders gleichmäßig, wenn diese eine in radialer Richtung und in Draufsicht senkrecht zur Erstreckungsrichtung des Einschnittes verlaufende Symmetrieebene aufweist.

Gemäß einer weiteren bevorzugten Ausführung sind Einschnitte vorgesehen, welche jeweils zumindest zwei, insbesondere jeweils bis zu drei, Ausnehmungen aufweisen. Mehrere Ausnehmungen sind vorteilhaft, da diese im Einschnittinneren ein größeres Leervolumen zur Verfügung stellen, ohne dabei die Steifigkeit des Profilpositives zu stark zu beeinflussen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen Profilblock eines Laufstreifens eines Fahrzeugluftreifens mit einer Ausführungsvariante der Erfindung,
Fig. 2 einen Schnitt entlang der Linie II-II der Fig. 1,
Fig. 3 eine Schrägansicht auf den Profilblock in Drahtdarstellung und
Fig. 4 eine Visualisierung eines Einschnittes (Abzugskörper des Einschnittes).

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Leichte LKWs mit zGM ≤ 7,5 t), wobei die Reifen insbesondere für den Ganzjahreseinsatz vorgesehen sind.

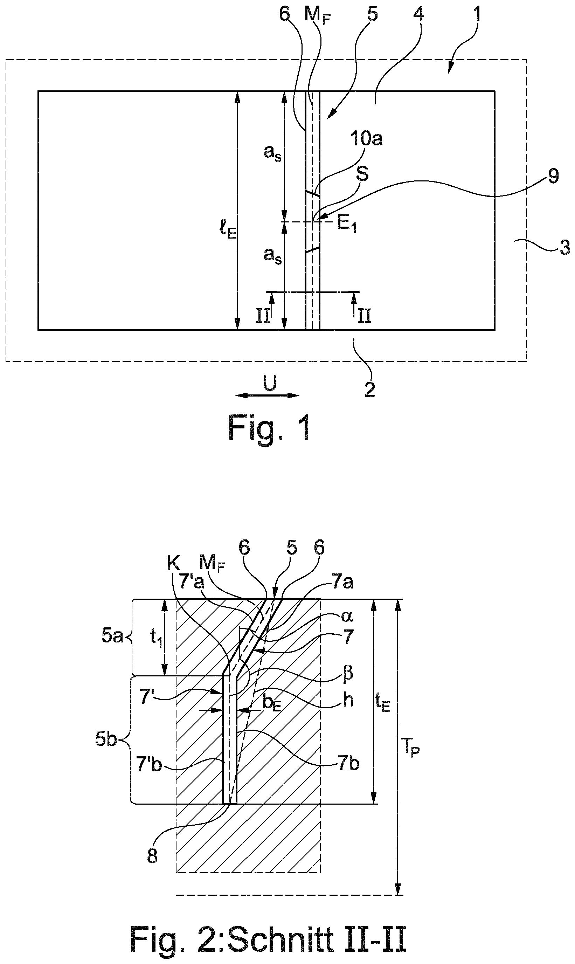

Fig. 1 zeigt eine Draufsicht auf einen Profilblock 1, welcher zu einem Laufstreifen eines Fahrzeugluftreifens gehört. Der Laufstreifen weist eine Vielzahl von Profilblöcken 1 auf. Die Umfangsrichtung des Reifens ist durch einen Doppelpfeil U gekennzeichnet. Der Profilblock 1 ist seitlich durch in Fig. 1 lediglich angedeutete Umfangsrillen 2 und durch zwischen den Umfangsrillen 2 verlaufende, ebenfalls lediglich angedeutete, in axialer Richtung verlaufende Querrillen 3 begrenzt.

Die Umfangsrillen 2 sowie vorzugsweise auch die Querrillen 3 sind in radialer Richtung auf die für den jeweiligen Fahrzeugluftreifen vorgesehene Profiltiefe T_{P} (angedeutet in Fig. 2) ausgeführt, welche üblicherweise 6,5 mm bis 12,0 mm, insbesondere 7,0 mm bis 9,5 mm, beträgt.

Der Profilblock 1 weist an der Laufstreifenperipherie eine Blockaußenfläche 4 auf und ist bezogen auf seine Umfangserstreckung in seinem mittleren Bereich mit einem von der Blockaußenfläche 4 ausgehenden, ins radial Innere des Profilblockes 1 hineinragenden Einschnitt 5 versehen. Der Einschnitt 5 durchquert den Profilblock 1, verläuft beim gezeigten Ausführungsbeispiel in Draufsicht gerade sowie in axialer Richtung und weist an der Blockaußenfläche 4 zwei gerade verlaufende Einschnittkanten 6 auf.

Gemäß Fig. 2 ist der Einschnitt 5 durch zwei von den Einschnittkanten 6 ausgehenden, einander gegenüberliegenden und parallel zueinander verlaufenden Einschnittwänden 7, 7' und einen Einschnittgrund 8 begrenzt und weist eine zwischen sowie senkrecht zu den Einschnittwänden 7, 7' ermittelte, konstante Breite b_{E} von 0,4 mm bis 2,0 mm, insbesondere von bis zu 1,2 mm, bevorzugt von bis zu 0,8 mm, eine in radialer Richtung gemessene vorzugsweise konstante, maximale Tiefe t_{E} (Tiefe an der tiefsten Stelle) von 60% bis 100%, insbesondere von 70% bis 95%, der Profiltiefe T_{P}, eine zu den Einschnittwänden 7, 7' übereinstimmend beabstandete Einschnittmittelfläche M_{F} und eine am Niveau der Blockaußenfläche 4 entlang der Einschnittmittelfläche M_{F} gemessene Länge I_{E} (Fig. 1) auf.

Der Einschnitt 5 weist, im Querschnitt senkrecht zu den Einschnittkanten 6 betrachtet (vergl. Lage der Schnittlinie II-II in Fig. 1), einen gerade verlaufenden, radial inneren Einschnittabschnitt 5b und einen an diesen anschließenden, gerade verlaufenden, radial äußeren Einschnittabschnitt 5a auf, wobei die Einschnittabschnitte 5a, 5b miteinander einen auf die Einschnittmittelfläche M_{F} bezogenen stumpfen Winkel β einschließen. Beim gezeigten Ausführungsbeispiel setzt sich der Einschnitt 5 aus den Einschnittabschnitten 5a, 5b zusammen. Alternativ kann der Einschnitt 5 zusätzlich zu den Einschnittabschnitten 5a, 5b einen in radialer Richtung oder zu dieser unter einem Winkel von bis zu 2° verlaufenden, von der Blockaußenfläche 4 ausgehenden, an den radial äußeren Einschnittabschnitt 5a anschließenden weiteren Einschnittabschnitt aufweisen, welcher in radialer Richtung in eine auf die Einschnittmittelfläche M_{F} bezogene Tiefe von bis zu 1,5 mm reicht.

Die Einschnittmittelfläche M_{F} weist am gegenseitigen Anschluss der Einschnittabschnitte 5a, 5b eine Knicklinie K (erscheint im gezeigten Querschnitt als Knickpunkt) auf, welche in einer in radialer Richtung ermittelten konstanten Tiefe t₁ von 30% bis 50%, insbesondere von 35% bis 45%, der maximalen Tiefe t_{E} des Einschnittes 5 verläuft.

Die bereits erwähnte Einschnittwand 7 verläuft über die Knickinnenseite und ist daher, im Querschnitt betrachtet, von einer zwischen den Enden der Einschnittmittelfläche M_{F} gerade verlaufenden Hilfslinie h geschnitten. Die Einschnittwand 7' verläuft über die Knickaußenseite, sodass diese, im Querschnitt betrachtet, von der Hilfslinie h nicht geschnitten ist.

Der radial äußere Einschnittabschnitt 5a verläuft, im Querschnitt senkrecht zu den Einschnittkanten 6 betrachtet, zur radialen Richtung unter einem Winkel α von 15° bis 55°, insbesondere von 20° bis 45°, bevorzugt von 25° bis 35°, und ist durch einen radial äußeren Wandabschnitt 7a der über die Knickinnenseite verlaufenden Einschnittwand 7 und einen radial äußeren Wandabschnitt 7'a der über die Knickaußenseite verlaufenden Einschnittwand 7' begrenzt.

Der radial innere Einschnittabschnitt 5b verläuft, im Querschnitt senkrecht zu den Einschnittkanten 6 betrachtet, in radialer Richtung, alternativ zur radialen Richtung unter einem Winkel von bis zu 5°, insbesondere von bis zu 3°, und ist durch einen radial inneren Wandabschnitt 7b der über die Knickinnenseite verlaufenden Einschnittwand 7 und einen radial inneren Wandabschnitt 7'b der über die Knickaußenseite verlaufenden Einschnittwand 7' begrenzt.

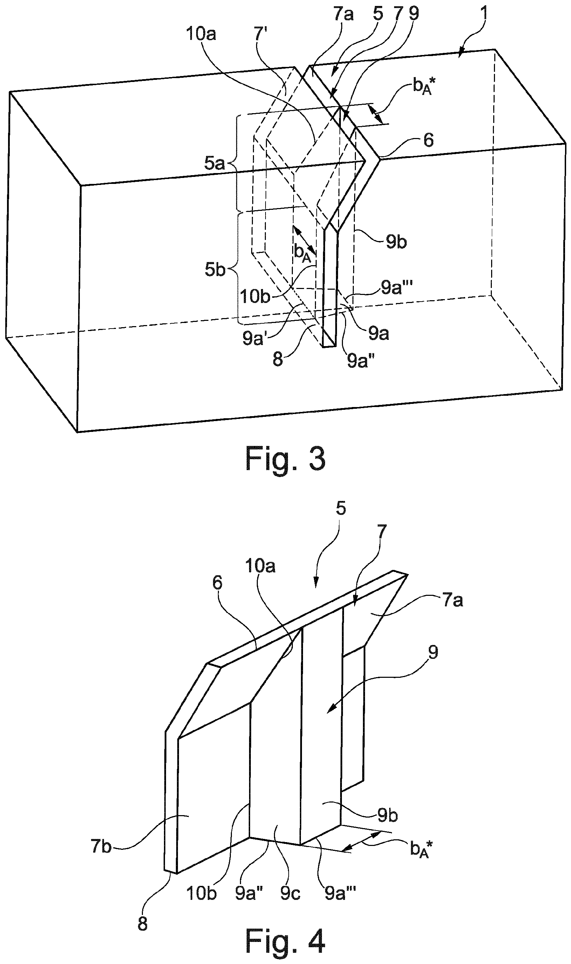

Wie Fig. 3 zeigt, ist im Profilblock 1 eine in radialer Richtung langgestreckte Ausnehmung 9 ausgebildet, welche die über die Knickinnenseite verlaufende Einschnittwand 7 abschnittsweise über ihre gesamte radiale Erstreckung unterbricht, daher zum radial äußeren Einschnittabschnitt 5a und zum radial inneren Einschnittabschnitt 5b geöffnet ist, zu den an den Umfangsrillen 2 (Fig. 1) liegenden Enden des Einschnittes 5 beabstandet ist und sich radial innerhalb des radial äußeren Wandabschnittes 7a der über die Knickinnenseite verlaufenden Einschnittwand 7 befindet (vergl. Fig. 4). Die Ausnehmung 9 verläuft ausgehend vom radial äußeren Wandabschnitt 7a in radialer Richtung ins Innere des Profilblockes 1 hinein und endet am Niveau des Einschnittgrundes 8. Gemäß Fig. 1 weist die Ausnehmung 9 eine in radialer Richtung und in Draufsicht senkrecht zu den Einschnittkanten 6 verlaufende Symmetrieebene E₁ auf, welche mit der Einschnittmittelfläche M_{F} einen am Niveau der Blockaußenfläche 4 liegenden Schnittpunkt S aufweist, der zu den Umfangsrillen 2 jeweils einen entlang der Einschnittmittelfläche M_{F} gemessenen Abstand as von 40% bis 60% der Länge I_{E} des Einschnittes 5 aufweist.

Wie Fig. 3 ferner zeigt, weist die Ausnehmung 9 an der über die Knickinnenseite verlaufenden Einschnittwand 7 ausgebildete Begrenzungskanten auf, zu welchen zwei am radial äußeren Wandabschnitt 7a ausgebildete, gerade verlaufende, radial äußere Begrenzungskanten 10a (vergl. Fig. 4) und zwei am radial inneren Wandabschnitt 7b ausgebildete, gerade, parallel zueinander sowie bei senkrechter Sicht auf den Wandabschnitt 7b senkrecht zur entsprechenden Einschnittkante 6 verlaufende, radial innere Begrenzungskanten 10b (vergl. Fig. 4) gehören. Die radial äußeren Begrenzungskanten 10a gehen von der der Einschnittwand 7 zugeordneten Einschnittkante 6 aus, verlaufen ausgehend von dieser unter Vergrößerung ihres gegenseitigen lichten Abstandes ins Innere des Einschnittes 5 hinein (vergl. Fig. 1) und enden am radial inneren Wandabschnitt 7b (Fig. 4). Die radial inneren Begrenzungskanten 10b schließen an die radial äußeren Begrenzungskanten 10a an und enden am Einschnittgrund 8 (vergl. Fig. 4).

Die Ausnehmung 9 ist in radialer Richtung durch eine gleichschenkelig-trapezförmige Bodenfläche 9a, eine der über die Kickaußenseite verlaufenden Einschnittwand 7' gegenüberliegende rechteckige Rückwand 9b (vergl. Fig. 4) und zwei ebene Seitenwände 9c (Fig. 4) begrenzt.

Die gleichschenkelig-trapezförmige Bodenfläche 9a verläuft am Niveau des Einschnittgrundes 8, daher in der erwähnten Tiefe t_{E} (Fig. 2), weist eine am Einschnittgrund 8 liegende, der längeren Grundseite des Trapezes entsprechende Basis 9a` (in Fig. 3 punktiert angedeutet), zwei jeweils einen Trapezschenkel bildende Bodenkanten 9a" und eine parallel zur Basis 9a' verlaufende, die kürzere Grundseite des Trapezes bildende Bodenkante 9a‴ auf.

Wie Fig. 3 und Fig. 4 jeweils zeigen, verläuft die rechteckige Rückwand 9b in radialer Richtung, geht von der der über die Knickinnenseite verlaufenden Einschnittwand 7 zugeordneten Einschnittkante 6 aus und endet in radialer Richtung an der die kürzere Grundseite des Trapezes bildenden Bodenkante 9a‴. Gemäß Fig. 4 sind die Seitenwände 9c jeweils von einer der radial äußere Begrenzungskanten 10a, der an diese anschließenden radial inneren Begrenzungskante 10b und der an diese anschließenden jeweils einen Trapezschenkel bildenden Bodenkante 9a" mitbegrenzt.

Gemäß Fig. 3 weist die Ausnehmung 9 zwischen ihren radial inneren Begrenzungskanten 10b eine parallel zur Laufstreifenperipherie ermittelte Breite b_{A}, auf, welche 15% bis 40%, bevorzugt 20% bis 30%, der Länge I_{E} (Fig. 1) des Einschnittes 5 einnimmt. Beim Ausführungsbeispiel ist die Breite b_{A} konstant, da die Begrenzungskanten 10b, wie bereits erwähnt, bei senkrechter Sicht auf den Wandabschnitt 7b senkrecht zur entsprechenden Einschnittkante 6 verlaufen. Die zwischen den radial äußeren Begrenzungskanten 10a parallel zur Laufstreifenperipherie ermittelte Breite der Ausnehmung 9 sowie die zwischen den Bodenkanten 9a" parallel zur Laufstreifenperipherie ermittelte Breite der Ausnehmung 9 nimmt jeweils ausgehend vom radial inneren Wandabschnitt 7b (Fig. 4) über die radial äußeren Begrenzungskanten 10a bzw. über die Bodenkanten 9a" kontinuierlich auf eine Breite b_{A}* (Fig. 3: Begrenzungskanten 10a, Fig. 4: Bodenkanten 9a") ab. Jede Breite b_{A}* beträgt 75% bis 95% der an der schmalsten Stelle ermittelten Breite b_{A}, beim Ausführungsbeispiel 75% bis 95% der konstanten Breite b_{A}.

Die Erfindung ist auf das beschriebene Ausführungsbeispiel nicht beschränkt.

Insbesondere können die Einschnitte jeweils mehr als eine Ausnehmung, vorzugsweise jeweils bis zu drei Ausnehmungen, aufweisen. Die Einschnitte können in Draufsicht auch bogen- und/oder wellenförmige oder dergleichen verlaufen, wobei sich die Länge der Einschnitte und der Winkel, unter welchem solche Einschnitte zur axialen Richtung verlaufen, jeweils auf eine gerade Linie beziehen, welche in Draufsicht die an der Laufstreifenperipherie liegenden Enden der Einschnittmittelfläche verbindet. Der Laufstreifen kann auch in Umfangsrichtung umlaufende Profilrippen aufweisen, in welchen die Einschnitte ausgebildet sind. Die Ausnehmung(en) kann bzw. können auch radial innerhalb des radial äußeren Endes des radial äußeren Einschnittabschnittes enden.

### Bezugszeichenliste

- 1: Profilblock
- 2: Umfangsrille
- 3: Querrille
- 4: Blockaußenfläche
- 5: Einschnitt
- 5a: radial äußerer Einschnittabschnitt
- 5b: radial innerer Einschnittabschnitt
- 6: Einschnittkante
- 7, 7': Einschnittwand
- 7a, 7'a: radial äußerer Wandabschnitt
- 7b, 7'b: radial innerer Wandabschnitt
- 8: Einschnittgrund
- 9: Ausnehm ung
- 9a: Bodenfläche
- 9a': Basis
- 9a": Bodenkante
- 9a‴: Bodenkante
- 9b: Rückwand
- 9c: Seitenwand
- 10a: radial äußere Begrenzungskante
- 10b: radial innere Begrenzungskante
- a_{S}: Abstand
- b_{E}, b_{A}, b_{A}*: Breite
- E₁: Symmetrieebene
- h: Hilfslinie
- K: Knicklinie
- I_{E}: Länge
- M_{F}: Einschnittmittelfläche
- S: Schnittpunkt
- t_{E}: maximale Tiefe
- t₁: Tiefe
- T_{P}: Profiltiefe
- U: Doppelpfeil (Umfangsrichtung)
- α, β: Winkel

## Patentansprüche

1. Fahrzeugluftreifen mit einem Laufstreifen mit Profilblöcken (1) oder zumindest einer in Umfangsrichtung umlaufenden Profilrippe, in welchen bzw. in welcher in Draufsicht unter einem Winkel von 0° bis zu 50° zur axialen Richtung verlaufende, eine Breite (b_{E}) von 0,4 mm bis 2,0 mm, eine maximale Tiefe (t_{E}) von 60% bis 100% der Profiltiefe (T_{P}), Einschnittwände (7, 7') und einen Einschnittgrund (8) aufweisende Einschnitte (5) ausgebildet sind, wobei jeder Einschnitt (5), im Querschnitt betrachtet, einen zur radialen Richtung unter einem Winkel (α) verlaufenden, radial äußeren Einschnittabschnitt (5a) und einen an diesen anschließenden, zur radialen Richtung unter einem Winkel verlaufenden, bis zum Einschnittgrund (8) reichenden, radial inneren Einschnittabschnitt (5b) aufweist, wobei die Einschnittabschnitte (5a, 5b) miteinander einen stumpfen Winkel (β) einschließen, sodass der Einschnitt (5) am gegenseitigen Anschluss der Einschnittabschnitte (5a, 5b) einen Knick aufweist, die eine Einschnittwand (7) über die Knickinnenseite und die andere Einschnittwand (7`) über die Knickaußenseite verläuft und die Einschnittwänden (7, 7') im radial äußeren Einschnittabschnitt (5a) radial äußere Wandabschnitte (7a, 7'a) und im radial inneren Einschnittabschnitt (5b) radial innere Wandabschnitte (7b, 7'b) aufweisen,
**dadurch gekennzeichnet,**
**dass** der Winkel (α), unter welchem der radial äußere Einschnittabschnitt (5a), im Querschnitt betrachtet, zur radialen Richtung verläuft, 15° bis 55° beträgt, dass der Winkel, unter welchem der radial innere Einschnittabschnitt (5b), im Querschnitt betrachtet, zur radialen Richtung verläuft, 0° bis 5° beträgt und dass an der über die Knickinnenseite verlaufenden Einschnittwand (7) des Einschnittes (5) lokal jeweils zumindest eine, in radialer Richtung langgestreckte Ausnehmung (9) ausgebildet ist, welche über beide Wandabschnitte (7a, 7b) verläuft und bis zum Einschnittgrund (8) reicht.

2. Fahrzeugluftreifen nach Anspruch 1, **dadurch gekennzeichnet, dass** die Ausnehmung (9) bis zum radial äußeren Ende des radial äußeren Wandabschnittes (7a) der über die Knickinnenseite verlaufenden Einschnittwand (7) reicht.

3. Fahrzeugluftreifen nach Anspruch 1 oder 2, **dadurch gekennzeichnet, dass** die bzw. jede Ausnehmung (9) am radial inneren Wandabschnitt (7b) der über die Knickinnenseite verlaufenden Einschnittwand (7) zwei insbesondere gerade verlaufende, radial innere Begrenzungskanten (10b) aufweist, zwischen welchen die bzw. jede Ausnehmung (9) an der schmalsten Stelle eine parallel zur Laufstreifenperipherie ermittelte Breite (b_{A}) aufweist, wobei - bei einer einzigen Ausnehmung (9) am jeweiligen Einschnitt (5) - die Breite (b_{A}) 15% bis 40%, bevorzugt 20% bis 30%, der Länge (l_{E}) des Einschnittes (6) einnimmt und wobei - bei mehreren Ausnehmungen (9) am jeweiligen Einschnitt (5) - die Breiten (b_{A}) der Ausnehmungen (9) gemeinsam 15% bis 40%, bevorzugt 20% bis 30%, der Länge (l_{E}) des Einschnittes (6) einnehmen.

4. Fahrzeugluftreifen nach einem der Ansprüche 1 bis 3, **dadurch gekennzeichnet, dass** die Ausnehmung (9) eine niveaugleich mit dem Einschnittgrund (8) ausgebildete Bodenfläche (9a) aufweist.

5. Fahrzeugluftreifen nach Anspruch 4, **dadurch gekennzeichnet, dass** die Bodenfläche (9a) trapezförmig, insbesondere gleichschenkelig trapezförmig ist, wobei sie eine am Einschnittgrund (8) liegende Basis (9a`), eine dieser gegenüberliege, die kürzere Grundseite des Trapezes bildende Bodenkante (9a‴) und zwei weitere Bodenkanten (9'a) aufweist.

6. Fahrzeugluftreifen nach Anspruch 4 oder 5, **dadurch gekennzeichnet, dass** die Ausnehmung (9) durch eine vom radial äußeren Ende des radial äußeren Wandabschnittes (7a) ausgehende, zur Bodenfläche (9a) verlaufende, ebene Rückwand (9b) mitbegrenzt ist.

7. Fahrzeugluftreifen nach Anspruch 3 und 6, **dadurch gekennzeichnet, dass** die Ausnehmung (9) an der Rückwand (9b) an der schmalsten Stelle eine parallel zur Laufstreifenperipherie ermittelte Breite (b_{A}*) von 75% bis 95% der zwischen den radial inneren Begrenzungskanten (10b) der Ausnehmung (9) an der schmalsten Stelle parallel zur Laufstreifenperipherie ermittelten Breite (b_{A}) aufweist.

8. Fahrzeugluftreifen nach einem der Ansprüche 4 bis 7, **dadurch gekennzeichnet, dass** die Ausnehmung (9) durch zwei vom radial äußeren Wandabschnitt (7a) der über die Knickinnenseite verlaufenden Einschnittwand (7) ausgehenden, zur Bodenfläche (9a) verlaufenden, ebenen Seitenwänden (9c) mitbegrenzt ist.

9. Fahrzeugluftreifen nach einem der Ansprüche 1 bis 8, **dadurch gekennzeichnet, dass** der radial äußere Einschnittabschnitt (5a) an den radial inneren Einschnittabschnitt (5b) in einer in radialer Richtung ermittelten Tiefe (t₁) von 30% bis 50%, insbesondere von 35% bis 45%, der maximalen Tiefe (t_{E}) des Einschnittes (5) anschließt.

10. Fahrzeugluftreifen nach einem der Ansprüche 1 bis 9, **dadurch gekennzeichnet, dass** der Winkel (α), unter welchem der radial äußere Einschnittabschnitt (5a) zur radialen Richtung verläuft, 20° bis 45°, bevorzugt 25° bis 35°, beträgt.

11. Fahrzeugluftreifen nach einem der Ansprüche 1 bis 10, **dadurch gekennzeichnet, dass** der radial innere Einschnittabschnitt (5b), im Querschnitt betrachtet, zur radialen Richtung unter einem Winkel von 0° bis 3° verläuft.

12. Fahrzeugluftreifen nach einem der Ansprüche 1 bis 11, **dadurch gekennzeichnet, dass** die Einschnitte (5) die Profilpositiven (1) durchqueren.

13. Fahrzeugluftreifen nach einem der Ansprüche 1 bis 12, **dadurch gekennzeichnet, dass** die Ausnehmung (9) eine in radialer Richtung und in Draufsicht senkrecht zur Erstreckungsrichtung des Einschnittes (5) verlaufende Symmetrieebene (E₁) aufweist.

14. Fahrzeugluftreifen nach einem der Ansprüche 1 bis 13, **dadurch gekennzeichnet, dass** Einschnitte (5) vorgesehen sind, welche jeweils zumindest zwei, insbesondere jeweils bis zu drei, Ausnehmungen (9) aufweisen.

## Claims

1. Pneumatic vehicle tyre having a tread having profile blocks (1) or at least one profile rib that is encircling in the circumferential direction, in which blocks or rib there are formed sipes (5) having sipe walls (7, 7') and a sipe bottom (8), said sipes extending, as seen in plan view, at an angle of 0° to 50° in relation to the axial direction, and having a width (bE) of 0.4 mm to 2.0 mm and a maximum depth (tE) of 60% to 100% of the profile depth (TP), wherein each sipe (5), as viewed in cross section, has a radially outer sipe portion (5a) which extends at an angle (α) in relation to the radial direction and, adjoining the latter, a radially inner sipe portion (5b), which extends at an angle in relation to the radial direction and extends down to the sipe bottom (8), wherein the sipe portions (5a, 5b) conjointly enclose an obtuse angle (β) in such a way that the sipe (5) has a kink where the sipe portions (5a, 5b) join one another, the one sipe wall (7) extends over the inner side of the kink and the other sipe wall (7`) extends over the outer side of the kink, and the sipe walls (7, 7`) have radially outer wall sections (7a, 7'a) in the radially outer sipe portion (5a) and radially inner wall sections (7b, 7'b) in the radially inner sipe portion (5b), **characterized**
**in that** the angle (α) at which the radially outer sipe portion (5a), viewed in cross section, runs in relation to the radial direction is 15° to 55°, in that the angle at which the radially inner sipe portion (5b), viewed in cross section, runs in relation to the radial direction is 0° to 5°, and in that at the sipe wall (7) of the sipe (5) extending over the inner side of the kink, at least one recess (9) extending in the radial direction is in each case formed locally, which extends over both wall sections (7a, 7b) and extends down to the sipe bottom (8).

2. Pneumatic vehicle tyre according to Claim 1, **characterized in that** the recess (9) extends up to the radially outer end of the radially outer wall section (7a) of the sipe wall (7) extending over the inner side of the kink.

3. Pneumatic vehicle tyre according to Claim 1 or 2, **characterized in that** the or each recess (9) on the radially inner wall section (7b) of the sipe wall (7) extending over the inner side of the kink has two particularly straight, radially inner boundary edges (10b), between which the or each recess (9) at the narrowest point has a width (bA) determined parallel to the running strip periphery, wherein - in the case of a single recess (9) at the respective sipe (5) - the width (bA) occupies 15% to 40%, preferably 20% to 30%, of the length (lE) of the sipe (6), and wherein - in the case of several recesses (9) at the respective sipe (5) - the widths (bA) of the recesses (9) conjointly occupy 15% to 40%, preferably 20% to 30%, of the length (lE) of the sipe (6).

4. Pneumatic vehicle tyre according to one of Claims 1 to 3, **characterized in that** the recess (9) has a bottom area (9a) formed at the same level as the sipe bottom (8).

5. Pneumatic vehicle tyre according to Claim 4, **characterized in that** the bottom area (9a) is trapezoidal, in particular isosceles trapezoidal, wherein it has a base (9a') lying at the sipe bottom (8), a bottom edge (9a‴) opposite thereto and forming the shorter bottom side of the trapezoid, and two further bottom edges (9'a).

6. Pneumatic vehicle tyre according to Claim 4 or 5, **characterized in that** the recess (9) is conjointly delimited by a flat rear wall (9b) extending from the radially outer end of the radially outer wall section (7a) to the bottom area (9a).

7. Pneumatic vehicle tyre according to Claims 3 and 6, **characterized in that** the recess (9) on the rear wall (9b), at the narrowest point, has a width (bA*) determined parallel to the running strip periphery of 75% to 95% of the width (bA) determined between the radially inner boundary edges (10b) of the recess (9), at the narrowest point parallel to the running strip periphery.

8. Pneumatic vehicle tyre according to one of Claims 4 to 7, **characterized in that** the recess (9) is conjointly delimited by two flat side walls (9c) which proceed from the radially outer wall section (7a) of the sipe wall (7) and extend by way of the inner side of the kink and extend to the bottom area (9a).

9. Pneumatic vehicle tyre according to one of Claims 1 to 8, **characterized in that** that the radially outer sipe portion (5a) adjoins the radially inner sipe portion (5b) at a depth (t1) determined in the radial direction of 30% to 50%, in particular 35% to 45%, of the maximum depth (tE) of the sipe (5).

10. Pneumatic vehicle tyre according to one of Claims 1 to 9, **characterized in that** the angle (α) at which the radially outer sipe portion (5a) runs in relation to the radial direction is 20° to 45°, preferably 25° to 35°.

11. Pneumatic vehicle tyre according to one of Claims 1 to 10, **characterized in that** the radially inner sipe portion (5b), as viewed in cross section, runs at an angle of 0° to 3° in relation to the radial direction.

12. Pneumatic vehicle tyre according to one of Claims 1 to 11, **characterized in that** the sipes (5) traverse the profile positives (1).

13. Pneumatic vehicle tyre according to one of Claims 1 to 12, **characterized in that** the recess (9) has a plane of symmetry (E1) running in the radial direction and in plan view perpendicularly to the direction of extent of the sipe (5).

14. Pneumatic vehicle tyre according to one of Claims 1 to 13, **characterized in that** sipes (5) which have in each case at least two, in particular in each case up to three, recesses (9) are provided.

## Revendications

1. Pneumatique pour véhicule ayant une bande de roulement avec des blocs profilés (1) ou au moins une nervure profilée s'étendant dans la direction circonférentielle, dans lesquels ou dans laquelle sont formées des entailles (5) s'étendant, en vue de dessus, selon un angle de 0° à 50° par rapport à la direction axiale, présentant une largeur (bε) de 0,4 mm à 2,0 mm, une profondeur maximale (t_{E}) de 60% à 100% de la profondeur de profil (T_{P}), des parois d'entaille (7, 7') et un fond d'entaille (8), chaque entaille (5), vue en coupe, présentant une partie d'entaille radialement extérieure (5a) qui s'étend selon un angle (α) par rapport à la direction radiale et une partie d'entaille radialement intérieure (5b) adjacente à celle-ci, qui s'étend selon un angle par rapport à la direction radiale et qui va jusqu'au fond d'entaille (8), les parties d'entaille (5a, 5b) formant entre elles un angle obtus (β), de sorte que l'entaille (5) présente un coude au niveau du raccordement mutuel des parties d'entaille (5a, 5b), ladite une paroi d'entaille (7) s'étend sur le côté intérieur du coude et l'autre paroi d'entaille (7') s'étend sur le côté extérieur du coude et les parois d'entaille (7, 7') présentent dans la partie d'entaille radialement extérieure (5a) des parties de paroi radialement extérieures (7a, 7'a) et dans la partie d'entaille radialement intérieure (5b) des parties de paroi radialement intérieures (7b, 7'b), **caractérisé**
**en ce que** l'angle (α) selon lequel la partie d'entaille radialement extérieure (5a), vue en coupe, s'étend par rapport à la direction radiale, est de 15° à 55°, **en ce que** l'angle selon lequel la partie d'entaille radialement intérieure (5b), vue en coupe, s'étend par rapport à la direction radiale, est de 0° à 5°, et **en ce que**, sur la paroi d'entaille (7) de l'entaille (5) s'étendant sur le côté intérieur du coude, est formé localement au moins un évidement (9) allongé dans la direction radiale, qui s'étend sur les deux parties de paroi (7a, 7b) et qui va jusqu'au fond de l'entaille (8).

2. Pneumatique pour véhicule selon la revendication 1, **caractérisé en ce que** l'évidement (9) s'étend jusqu'à l'extrémité radialement extérieure de la partie de paroi radialement extérieure (7a) de la paroi d'entaille (7) s'étendant sur le côté intérieur du coude.

3. Pneumatique pour véhicule selon la revendication 1 ou la revendication 2, **caractérisé en ce que** l'évidement (9), ou chaque évidement (9), présente, sur la partie de paroi radialement intérieure (7b) de la paroi d'entaille (7) s'étendant sur le côté intérieur de coude, deux arêtes de délimitation (10b) radialement intérieures s'étendant en particulier en ligne droite, entre lesquelles l'évidement (9) ou les évidements (9) présentent, à l'endroit le plus étroit, une largeur (b_{A}) déterminée parallèlement à la périphérie de la bande de roulement, la largeur (b_{A}) - dans le cas d'un seul évidement (9) sur l'entaille (5) respective - représentant 15% à 40%, de préférence 20% à 30%, de la longueur (l_{E}) de l'entaille (6) et - dans le cas de plusieurs évidements (9) sur l'entaille respective (5) - les largeurs (b_{A}) des évidements (9) représentant ensemble 15% à 40%, de préférence 20% à 30%, de la longueur (l_{E}) de l'entaille (6).

4. Pneumatique pour véhicule selon l'une des revendications 1 à 3, **caractérisé en ce que** l'évidement (9) présente une surface de fond (9a) réalisée au même niveau que le fond d'entaille (8).

5. Pneumatique pour véhicule selon la revendication 4, **caractérisé en ce que** la surface de fond (9a) est de forme trapézoïdale, en particulier de forme trapézoïdale isocèle, présentant une base (9a') située sur le fond d'entaille (8), une arête de fond (9a‴) opposée à celle-ci et formant le côté de base le plus court du trapèze, et deux autres arêtes de fond (9'a).

6. Pneumatique pour véhicule selon la revendication 4 ou la revendication 5, **caractérisé en ce que** l'évidement (9) est délimité conjointement par une paroi arrière plane (9b) partant de l'extrémité radialement extérieure de la partie de paroi (7a) radialement extérieure et s'étendant vers la surface de fond (9a).

7. Pneumatique pour véhicule selon les revendications 3 et 6, **caractérisé en ce que** l'évidement (9) sur la paroi arrière (9b) présente, à l'endroit le plus étroit, une largeur (b_{A}*), déterminée parallèlement à la périphérie de la bande de roulement, de 75% à 95% de la largeur (b_{A}) déterminée entre les bords de délimitation (10b) radialement intérieurs de l'évidement (9) à l'endroit le plus étroit parallèlement à la périphérie de la bande de roulement.

8. Pneumatique pour véhicule selon l'une des revendications 4 à 7, **caractérisé en ce que** l'évidement (9) est délimité conjointement par deux parois latérales planes (9c) partant de la partie de paroi (7a) de la paroi d'entaille (7) s'étendant sur le côté intérieur du coude et s'étendant vers la surface de fond (9a).

9. Pneumatique pour véhicule selon l'une des revendications 1 à 8, **caractérisé en ce que** la partie d'entaille radialement extérieure (5a) se raccorde à la partie d'entaille radialement intérieure (5b) à une profondeur (t₁), déterminée dans la direction radiale, de 30% à 50%, notamment de 35% à 45%, de la profondeur maximale (t_{E}) de l'entaille (5).

10. Pneumatique pour véhicule selon l'une des revendications 1 à 9, **caractérisé en ce que** l'angle (α) selon lequel la partie d'entaille radialement extérieure (5a) s'étend par rapport à la direction radiale est compris entre 20° et 45°, de préférence entre 25° et 35°.

11. Pneumatique pour véhicule selon l'une quelconque des revendications 1 à 10, **caractérisé en ce que** la partie d'entaille radialement intérieure (5b), vue en coupe, s'étend selon un angle compris entre 0° et 3° par rapport à la direction radiale.

12. Pneumatique pour véhicule selon l'une des revendications 1 à 11, **caractérisé en ce que** les entailles (5) traversent les positifs profilés (1).

13. Pneumatique pour véhicule selon l'une des revendications 1 à 12, **caractérisé en ce que** l'évidement (9) présente un plan de symétrie (E₁) s'étendant dans la direction radiale et, en vue de dessus, perpendiculairement à la direction d'extension de l'entaille (5).

14. Pneumatique pour véhicule selon l'une des revendications 1 à 13, **caractérisé en ce qu'**il est prévu des entailles (5) qui présentent chacune au moins deux, en particulier chacune jusqu'à trois, évidements (9).
